# NOUVEAU FASCICULE DE BREVET EUROPEEN

(11) **EP 1 098 848 B2**
(45) Date de publication et mention de la décision concernant l'opposition: **25.07.2012**
(45) Mention de la délivrance du brevet: 15.10.2003
(21) Numéro de dépôt: 99929417.6
(22) Date de dépôt: 06.07.1999
(51) Int. Cl.: C01F 7/02, C01F 7/14, C01F 7/34, B01J 21/04, B01J 35/10

(54) **Procédé de préparation d'un hydrate d'aluminium dispersible**
Verfahren zur Herstellung eines dispergierbares aAuminiumhydrat
Method for preparing a dispersible aluminium hydrate

(30) Priorité: 06.07.1998 FR 9808609; 16.04.1999 FR 9904862
(43) Date de publication de la demande: 16.05.2001
(73) Titulaire: IFP Energies nouvelles, 92852 Rueil-Malmaison Cedex (FR)
(72) Inventeur: LE GOFF, Pierre-Yves, F-75020 Paris (FR); LAVAL, Philippe, F-75018 Paris (FR); MARTIN, Michel, F-69006 Lyon (FR)
(74) Mandataire: Boulinguiez, Didier
(86) Numéro de dépôt international: PCT/FR1999/001632
(87) Numéro de publication internationale: WO 2000/001617

(56) Documents cités:
- EP-A- 0 324 936
- EP-A- 0 505 896
- WO-A-95/12547
- DE-A- 3 243 193
- GB-A- 1 308 316
- JP-A- 57 017 425
- US-A- 3 864 461
- US-A- 4 120 943
- US-A- 4 313 923
- US-A- 4 332 782
- US-A- 4 371 513
- US-A- 4 676 928
- US-A- 4 762 684
- US-A- 5 194 243
- G. MARTINO: 'Declaration under Rule 37 CFR § 1132',

## Description

La présent invention concerne un procédé de préparation d'hydrates d'aluminium.

Les hydrates d'aluminium sont utilisés pour la préparation de catalyseurs ou de supports de catalyseurs. La préparation consiste habituellement à mettre en forme l'hydrate d'aluminium, puis à le calciner pour le transformer en alumine. Les propriétés de l'hydrate d'aluminium influencent les caractéristiques de l'alumine obtenue et, par conséquent, les propriétés d'application des catalyseurs et des supports de catalyseurs. Ainsi, une dispersibilité dans l'eau élevée des hydrates d'aluminium est une propriété recherchée car elle permet de préparer des catalyseurs ou supports de catalyseurs aux propriétés avantageuses :
- tout d'abord, un hydrate d'aluminium dispersible conduit à des supports de catalyseurs ne contenant pas d'agglomérats ou d'agrégats d'alumine. On obtient donc des supports homogènes.
- ensuite, avec un hydrate d'aluminium dispersible, les conditions de mise en forme sont plus douces (par exemple, le taux d'acide est plus faible) ce qui permet de conserver un volume poreux total important.
- enfin, les catalyseurs ou supports de catalyseurs issus d'un hydrate d'aluminium dispersible présentent une répartition poreuse monomodale sans méso- et/ou macropores (par méso et/ou macropores on entend tout pores de taille supérieure au diamètre médian). Dans certaines applications telles que l'hydrotraitement dans les raffineries de pétrole, l'absence de ces méso et/ou macropores est recherchée : en effet, si le diamètre des pores est faible (100 Å), les métaux ne rentrent pas dans le support ce qui évite sa désactivation. De plus, si la répartition poreuse est étroite, seules certaines molécules entrent dans le support ce qui permet de faire un tamisage moléculaire. Par ailleurs, les effets de cockage sont limités et l'absence de macropores augmente la résistance mécanique du support.

Un but de la présente invention est donc de proposer un procédé de préparation d'hydrates d'aluminium présentant une dispersibilité élevée dans l'eau.

Dans ces buts, l'invention concerne la préparation d'un hydrate d'aluminium présentant une dispersibilité dans l'eau d'au moins 80 % en poids pour un diamètre inférieur ou égal à 0,3 µm.

Dans une des mises en oeuvre, la préparation de l'hydrate d'aluminium s'effectue sans retromélange, selon les étapes suivantes :
1 - mélange d'une source acide d'aluminium et d'une base, ou d'une source basique d'aluminium et d'un acide, de manière à précipiter un monohydrate d'aluminium,
2 - mûrissement,
3 - filtration,
4 - lavage, et
5 - séchage,

Dans une autre mise en oeuvre, la préparation de l'hydrate d'aluminium s'effectue avec rétromélange, selon les étapes suivantes :
1' - mélange dans un réacteur agité avec rétromélange de sulfate d'aluminium et d'une base, ces réactifs étant utilisés sous forme de solutions aqueuses, à pH compris entre 6 et 8,5 et à une température comprise entre 50 et 95°C,
2' - mûrissement à pH compris entre 9 et 11 et à une température comprise entre 60 et 90°C, la dispersion étant agitée au cours du mûrissement,
3' - filtration,
4' - lavage, et
5' - séchage.

La figure 1 représente les répartitions granulométriques d'un hydrate d'aluminium selon l'invention et d'un hydrate d'aluminium selon l'art antérieur.

L'hydrate d'aluminium préparé selon l'invention est majoritairement de structure cristalline monohydrate d'aluminium (AIOOH, nH₂O) de type boehmite et/ou pseudo-boehmite. "Majoritairement" signifie que le taux de monohydrate d'aluminium de l'hydrate d'aluminium selon l'invention est supérieur à 30 % en poids, de préférence supérieur à 60 %. Le taux de cristallisation et la nature de la phase cristalline sont mesurés par diffraction RX. Le complément au monohydrate d'aluminium est généralement un hydrate d'aluminium amorphe ou un hydrate d'aluminium très fin non analysable par diffraction RX.

Cet hydrate d'aluminium se caractérise par sa haute dispersibilité, qui est d'au moins 80 % en poids pour un diamètre inférieur ou égal à 0,3 µm, et de préférence d'au moins 90 % en poids pour un diamètre inférieur ou égal à 0,3 µm. L'hydrate d'aluminium est notamment dispersible dans l'eau à un pH différent du point isoélectrique (PIE) de l'hydrate d'aluminium.

La dispersibilité de l'hydrate d'aluminium est évaluée à partir de son analyse granulométrique donnant le poids cumulé en fonction du diamètre de sphère équivalente. Cette analyse est obtenue par sédimentation par gravité d'une suspension de l'hydrate à analyser dans un appareil Sédigraph en suivant le protocole suivant. L'hydrate d'aluminium est malaxé pendant 30 minutes à l'aide d'un malaxeur de type Brabender avec de l'acide nitrique, à raison de 6 % en poids par rapport à l'hydrate d'aluminium, et avec de l'eau, la quantité d'eau étant telle que le mélange conduit à une pâte présentant une perte au feu à 1000°C d'environ 58 % en poids. Puis, la pâte obtenue est diluée à 100 g/l avec de l'eau déionisée et la dispersion obtenue est homogénéisée avec des ultrasons de puissance modérée (2 minutes avec une sonde de 5 mm à la puissance de 100 Watts).

Enfin, la dispersion est analysée au Sedigraph en retenant les conditions de sédimentation suivantes :
- densité de l'alumine : 3,25 g/cm³
- liquide porteur : eau
- densité du liquide : 0,9957 g/cm³
- viscosité du milieu : 0,8007 mPa.s
- température de l'essai : 30°C.

A partir de la courbe granulométrique donnée par l'appareil Sedigraph, on lit la dispersibilité de l'hydrate d'aluminium qui correspond au pourcentage en masse de particules dont la taille est inférieure à 0,3 µm. Plus ce pourcentage est élevé, meilleure est la dispersibilité.

L'hydrate d'aluminium préparé selon l'invention se présente habituellement sous forme de poudre. Par ailleurs, l'hydrate d'aluminium présente en outre des propriétés de répartition poreuse recherchées dans certaines applications de raffinage du pétrole. Ainsi, les diamètres de pores de l'hydrate d'aluminium sont compris entre 50 et 300 Å, de manière préférée entre 80 et 250 Å et de manière encore plus préférée entre 80 et 150 Å. En outre, l'hydrate d'aluminium présente des tailles de cristallites inférieures à 50 Å. Enfin, l'hydrate d'aluminium présente une surface spécifique supérieure à 280 m²/g, de préférence comprise entre 300 et 400 m²/g et de manière encore plus préférée comprise entre 300 et 350 m²/g.

L'invention concerne les procédés de préparation d'un tel hydrate d'aluminium. Dans une des mises en oeuvre, la préparation de l'hydrate d'aluminium s'effectue sans rétromélange, selon les étapes suivantes :
1 - mélange d'une source acide d'aluminium et d'une base, ou d'une source basique d'aluminium et d'un acide, de manière à précipiter un monohydrate d'aluminium,
2 - mûrissement,
3 - filtration,
4 - lavage, et
5 - séchage.

Ce procédé met en oeuvre les étapes habituelles de préparation d'un hydrate d'aluminium par précipitation acido-basique, à savoir précipitation de l'hydrate à partir de sels acides et/ou basiques d'aluminium, puis mûrissement, filtration, lavage et séchage de l'hydrate obtenu. Ce procédé est caractérisé en ce que l'étape 1 est effectuée sans rétromélange.

Dans **l'étape 1**, la source acide d'aluminium peut être, par exemple, choisie parmi au moins un des composés suivants : le chlorure d'aluminium, le sulfate d'aluminium, le nitrate d'aluminium. La source basique d'aluminium peut être choisie parmi les sels basiques d'aluminium tels que l'aluminate de sodium, l'aluminate de potassium.
Selon la nature acide ou basique du composé de départ à base d'aluminium, on précipite l'hydrate d'aluminium à l'aide d'une base ou d'un acide choisi, par exemple, parmi : l'acide chlorhydrique, l'acide sulfurique, la soude ou un composé basique ou acide de l'aluminium tel que cité ci-dessus. Les deux réactifs peuvent, par exemple, être le sulfate d'aluminium et l'aluminate de soude.
Les réactifs sont habituellement utilisés sous la forme de solutions aqueuses.
La précipitation de l'hydrate d'aluminium est obtenue par contrôle du pH. Le pH est choisi de manière à obtenir la précipitation de monohydrate d'aluminium ; en général, ce pH est compris entre 6 et 10 pour une température de 60°C, de préférence entre 8 et 10. Le contrôle est réalisé habituellement par le choix des débits et des concentrations des réactifs introduits dans le réacteur.
Lors de la précipitation, il se forme une suspension de l'hydrate d'aluminium.

La caractéristique essentielle du présent procédé tient à la nature du réacteur utilisé dans cette étape 1. Dans cette mise en oeuvre de l'invention, le mélange des réactifs de l'étape 1 doit être réalisé de manière à ce que le phénomène de rétromélange soit minimisé, et préférentiellement totalement évité. Par rétromélange, on entend le phénomène par lequel le produit issu de la réaction, c'est-à-dire l'hydrate d'aluminium, entre en contact avec les réactifs de départ qui continuent d'être introduits dans le réacteur et avec l'hydrate qui a été formé auparavant dans le réacteur. Le réacteur utilisé doit donc, par exemple, être tel que le produit de la réaction soit éloigné du lieu d'introduction des réactifs de départ.
Un tel mélange peut être réalisé dans un réacteur à écoulement piston et, notamment, dans un mélangeur statique. On peut citer les mélangeurs Lightnin.
Les étapes 2 à 5 sont, elles, semblables à celles couramment utilisées dans la synthèse d'hydrate d'aluminium.

Dans **l'étape 2**, l'hydrate d'aluminium obtenu, en dispersion dans l'eau, est mûri. Il peut être simplement stocké dans un réservoir, il peut également être chauffé ou mis sous pression dans un autoclave.

Dans **l'étape 3,** la suspension d'hydrate d'aluminium mûri est filtrée.

Dans **l'étape 4,** l'agglomérat d'hydrate d'aluminium filtré est lavé à l'eau pour éliminer les impuretés indésirables.

Dans **l'étape 5,** l'hydrate d'aluminium lavé est séché : on obtient une poudre d'hydrate d'aluminium. Ce séchage est réalisé à une température qui évite l'élimination de l'eau liée.

Dans une autre mise en oeuvre, la préparation de l'hydrate d'aluminium s'effectue avec rétromélange, selon les étapes suivantes :
1' - mélange dans un réacteur agité avec rétromélange de sulfate d'aluminium et d'une base, ces réactifs étant utilisés sous forme de solutions aqueuses, à pH compris entre 6 et 8,5 et à une température comprise entre 50 et 95°C,
2' - mûrissement à pH compris entre 9 et 11 et à une température comprise entre 60 et 90°C, la dispersion étant agitée au cours du mûrissement,
3' - filtration,
4' - lavage, et,
5' - séchage.

Dans **l'étape 1'** de précipitation, il est essentiel de choisir comme source d'aluminium le sulfate d'aluminium. La sélection de ce composé de départ permet d'obtenir les propriétés désirées de l'hydrate d'aluminium préparé dans un réacteur avec rétromélange.

La source basique peut être de la soude ; il peut également s'agir d'un composé basique de l'aluminium. De préférence dans cette mise en oeuvre avec rétromélange, il s'agit de la soude ou de l'aluminate de sodium.
Les réactifs sont utilisés sous la forme de solutions aqueuses.
La précipitation de l'hydrate d'aluminium désiré est obtenue en partie par le contrôle du pH, ainsi, le pH doit être compris entre 6 et 8,5. De préférence, il est compris entre 6,5 et 8,5 encore plus préférentiellement entre 6,5 et 7. Le contrôle est réalisé habituellement par le choix des débits et des concentrations des réactifs introduits dans le réacteur.
La précipitation de l'hydrate d'aluminium désiré est également obtenue en partie par le contrôle de la température qui doit être comprise entre 50 et 95°C, de préférence entre 50 et 70°C.
Lors de la précipitation, il se forme une suspension de l'hydrate d'aluminium.
Au cours de la précipitation, le réacteur est agité avec rétromélange. Cela signifie que le produit issu de la réaction, c'est à dire l'hydrate d'aluminium, entre en contact avec les réactifs de départ qui continuent d'être introduits dans le réacteur et avec l'hydrate qui a été formé auparavant dans le réacteur. A cet effet, on peut utiliser tout type de réacteur muni d'un mobile d'agitation, comme, par exemple, les hélices marines, les pales inclinées ou les turbines Rushton.

Dans **l'étape 2',** l'hydrate d'aluminium obtenu, en dispersion dans l'eau, est mûri. Cette étape 2' est également un point clé dans l'obtention avec rétromélange de l'hydrate d'aluminium désiré. Cette étape de mûrissement consiste à stocker la suspension issue de l'étape 1' dans un réservoir à pH compris entre 9 et 11 et à une température comprise entre 60 et 90°C. La durée du mûrissement est généralement d'au moins 10 minutes.
Au cours du mûrissement, le pH est contrôlé par ajout d'une base ; il peut s'agir d'aluminate de sodium ou de soude. De préférence, il s'agit de la soude. La dispersion est agitée au cours du mûrissement.
Les étapes 3', 4' et 5' sont réalisées selon les méthodes classiquement connues par l'homme du métier, et par exemple selon les méthodes décrites dans les étapes 3, 4 et 5.

Les hydrates preparés selon l'invention peuvent être utilisés pour la préparation de catalyseurs ou de supports de catalyseurs à base d'alumine.
Cette préparation est connue de l'homme du métier et consiste en général à mettre en forme l'hydrate d'aluminium, puis à le calciner.
La mise en forme peut être réalisée par toute méthode connue, telles que par exemple : malaxage/extrusion, mise en forme en gouttes (oil-drop), granulation, compactage, atomisation.

L'hydrate mis en forme est ensuite calciné à une température pouvant varier entre 300 et 1000°C, préférentiellement entre 500 et 800°C.
L'intérêt majeur de l'hydrate d'aluminium selon l'invention dans la préparation des catalyseurs ou supports de catalyseurs est que son utilisation permet de contrôler le taux de macropores dans les catalyseurs ou supports de catalyseurs. L'utilisation de cet hydrate permet en effet d'éviter la présence de méso- ou macropores dans l'alumine des catalyseurs ou supports de catalyseurs. Par macropores, on entend tous les pores dont le diamètre est supérieur à la valeur du diamètre médian, préférentiellement à la valeur du diamètre médian plus 30 Å. Le diamètre médian se définit, lui, à partir de la courbe de répartition poreuse, obtenue par mesure de porosité au mer-cure : il correspond au point d'inflexion de cette courbe (c'est-à-dire le diamètre pour lequel la dérivée de la courbe volume = f(diamètre) passe par un maximum).

Les exemples suivants illustrent l'invention sans toutefois en limiter la portée.

### EXEMPLES

### Exemple 1 selon l'invention

### Etape 1 : précipitation

On utilise un mélangeur statique de référence Lightnin de diamètre DN25.
On introduit dans le réacteur les réactifs suivants aux concentrations et débits tels qu'indiqués ci-dessous :

| | | |
|---|---|---|
| sulfate d'aluminium | 22,75 g/l | 500 l/h |
| aluminate de soude | 290 g/l | 86 l/h |

La température est maintenue à 60°C.
En sortie du mélangeur statique, le pH est de 9 et la concentration en hydrate d'aluminium est de 60 g/l.

### Etape 2 - mûrissement

L'hydrate obtenu est introduit dans un réacteur agité dont le mobile d'agitation est une hélice, la puissance d'agitation étant de 500 W/m³. Le volume du réacteur est de 120 litres.
On réintroduit en discontinu de l'aluminate de soude à 290 g/l pour maintenir le pH à 9.
La température de mûrissement est de 90°C. La durée est de 3 heures.

### Etapes 3, 4, 5

L'hydrate est ensuite filtré et lavé par de l'eau. La quantité d'eau de lavage est de l'ordre de 30 40 l/kg d'hydrate d'aluminium.

Puis, l'hydrate est séché par atomisation, la température de sortie est de 115°C.

### Résultats

L'hydrate obtenu présente les caractéristiques suivantes :
- nature cristalline majoritaire : boehmite,
- taux de boehmite : 75 % en poids,
- taille des cristallites : 45 Å,
- perte au feu à 1000°C : 23 % en poids,
- volume poreux : 0,75 cm³/g,
- diamètre pores : 91 Å,
- surface spécifique : 325 m²/g.

La dispersibilité de l'hydrate est mesurée à l'aide d'un Sedigraph 5000 ET selon le protocole défini ci-dessous. Plus précisément, on malaxe pendant 30 minutes 46,4 g de l'hydrate d'aluminium avec une solution contenant 3,15 g d'acide nitrique et 38,64 g d'eau déionisée. La pâte obtenue présente une perte au feu à 1000°C de 59,5 % en poids. Cette pâte est diluée à 100 g/l avec de l'eau déionisée et la dispersion obtenue est homogénéisée avec des ultrasons de puissance modérée (2 minutes avec une sonde de 5 mm à la puissance de 100 Watts). Enfin, la dispersion est analysée au Sedigraph en retenant les conditions de sédimentation définies précédemment.
L'analyse granulométrique apparaît sur la figure 1. On constate que le pourcentage en masse de particules dont la taille déterminée par Sédigraph est inférieure à 0,3 µm est de 92 %. Cet hydrate d'aluminium est hautement dispersible.

### Exemple 2 comparatif

### Etape 1 : précipitation

On utilise un réacteur agité dont le mobile d'agitation est une hélice, la puissance d'agitation étant de 500 W/m³. Le volume du réacteur est de 12 litres, il fonctionne en continu à l'aide d'une régulation de niveau.
On introduit dans le réacteur les réactifs suivants aux concentrations et débits tels qu'indiqués ci-dessous :

| | | |
|---|---|---|
| sulfate d'aluminium | 22,75 g/l | 52,5 l/h |
| aluminate de soude | 290 g/l | 8,75 l/h |

La température est maintenue à 60°C.
Le pH est maintenu à 9 par le contrôle des débits des réactifs, et la concentration finale en hydrate d'aluminium est de l'ordre de 60 g/l.

### Etape 2 - mûrissement

Cette étape est identique à celle de l'exemple 1.

### Etapes 3, 4, 5

L'hydrate d'aluminium est ensuite filtré, lavé et séché comme dans l'exemple 1.

### Résultats

L'hydrate d'aluminium obtenu présente les caractéristiques suivantes :
- nature cristalline majoritaire : boehmite,
- taux de boehmite : 75 % en poids,
- taille des cristallites : 45 Å,
- volume poreux total : 0,65 cm³/g,
- diamètre des pores : 80 Å,
- surface spécifique : 310 m²/g.

La dispersibilité de l'hydrate est mesurée à l'aide d'un Sedigraph 5000 ET selon le protocole défini ci-dessus dans l'exemple 1.

L'analyse granulométrique apparaît sur la figure 1. On constate que le pourcentage en masse de particules dont la taille déterminée par Sédigraph est inférieure à 0,3 µm est de 71 %.

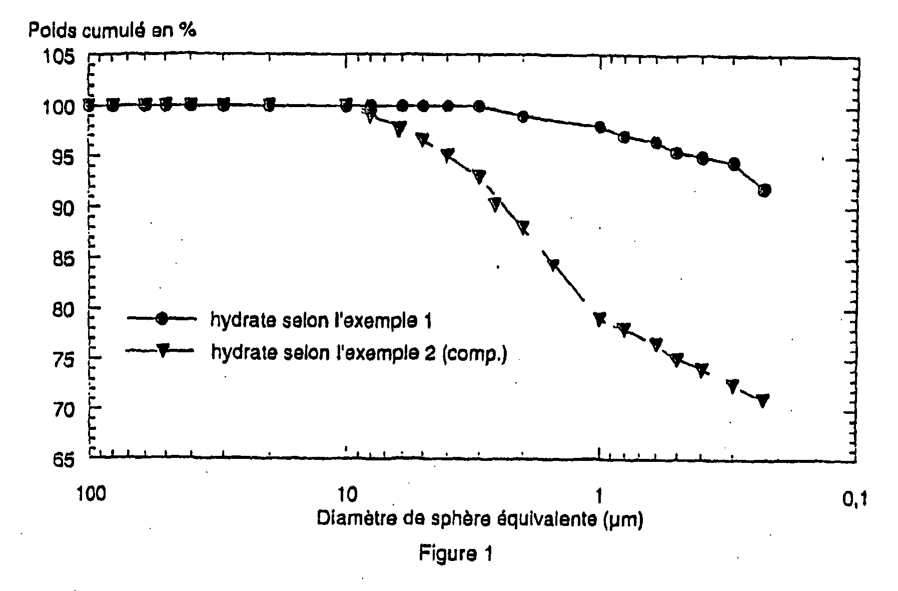

### Exemple 3 comparatif :

### Etape 1' : précipitation

On introduit dans un réacteur agité de 3 litres :
- une solution d'aluminate de sodium à 142 g/l en Al2O3 avec un débit de 4,8 l/h,
- une solution de sulfate d'aluminium à 80 g/l en Al2O3 avec un débit voisin de 3,8 l/h, et
- de l'eau avec un débit de 8,8 l/h. La température de l'eau est de 60°C.
   La valeur du débit de sulfate d'aluminium permet de réguler le pH du réacteur à une valeur voisine de 9.

### Etape 2' - mûrissement

Cette étape est identique à celle de l'exemple 1.

### Etapes 3', 4', 5'

L'hydrate d'aluminium est ensuite filtré, lavé et séché comme dans l'exemple 1.

La dispersibilité de l'hydrate est mesurée à l'aide d'un Sedigraph 5000 ET selon le protocole défini ci-dessus dans l'exemple 1. On constate que le pourcentage en masse de particules dont la taille déterminée par Sédigraph est inférieure à 0,3 µm est de 72 %.

### Exemple 4 comparatif :

### Etape 1' : précipitation

On introduit dans un réacteur agité de 3 litres :
- une solution d'aluminate de sodium à 142 g/l en Al2O3 avec un débit de 4,8 l/h,
- une solution de nitrate d'aluminium à 80 g/l en Al2O3 avec un débit voisin de 3,8 l/h, et
- de l'eau avec un débit de 8,8 l/h.
La température de l'eau est de 60°C.
La valeur du débit de nitrate d'aluminium permet de réguler le pH du réacteur à une valeur voisine de 7.

### Etape 2' - mûrissement

Cette étape est identique à celle de l'exemple 1.

### Etapes 3', 4', 5'

L'hydrate d'aluminium est ensuite filtré, lavé et séché comme dans l'exemple 1.

### Résultats :

L'hydrate obtenu présente une taille des cristallites de 402 Å.
La dispersibilité de l'hydrate est mesurée à l'aide d'un Sedigraph 5000 ET selon le protocole défini ci-dessus dans l'exemple 1. On constate que le pourcentage en masse de particules dont la taille déterminée par Sédigraph est inférieure à 0,3 µm est de 68 %.

### Exemple 5 selon l'invention :

### Etape 1' : précipitation

On introduit dans un réacteur agité de 3 litres :
- une solution d'aluminate de sodium à 142 g/l en Al2O3 avec un débit de 4,8 l/h,
- une solution de sulfate d'aluminium à 80 g/l en Al2O3 avec un débit voisin de 5 l/h, et
- de l'eau avec un débit de 8,8 l/h.
La température de l'eau est de 60°C.
En fait, la valeur du débit de sulfate d'aluminium permet de réguler le pH du réacteur à une valeur voisine de 7.

### Etape 2' - mûrissement

Cette étape est identique à celle de l'exemple 1.

### Etapes 3', 4', 5'

L'hydrate d'aluminium est ensuite filtré, lavé et séché comme dans l'exemple 1.

### Résultats :

L'hydrate obtenu présente un taille des cristallites de 35 À et une surface spécifique de 321 m²/g.
La dispersibilité de l'hydrate est mesurée à l'aide d'un Sedigraph 5000 ET selon le protocole défini ci-dessus dans l'exemple 1. On constate que le pourcentage en masse de particules dont la taille déterminée par Sédigraph est inférieure à 0,3 µm est de 81 %. Cet hydrate d'aluminium est hautement dispersible.

### Exemple 6 selon l'invention :

### Etape 1' : précipitation

On introduit dans un réacteur agité de 3 litres :
- une solution d'aluminate de sodium à 356 g/l en Al2O3 avec un débit de 4,5 l/h,
- une solution de sulfate d'aluminium à 110 g/l en Al2O3 avec un débit voisin de 7 l/h, et
- de l'eau avec un débit de 8,8 l/h.

La température de l'eau est de 60°C.
La valeur du débit de sulfate d'aluminium permet de réguler le pH du réacteur à une valeur voisine de 7.

### Etape 2' - mûrissement

Cette étape est identique à celle de l'exemple 1.

### Etapes 3', 4', 5'

L'hydrate d'aluminium est ensuite filtré, lavé et séché comme dans l'exemple 1.

### Résultats :

L'hydrate obtenu présente une taille des cristallites de 32 À et une surface spécifique de 345 m²/g.
La dispersibilité de l'hydrate est mesurée à l'aide d'un Sedigraph 5000 ET selon le protocole défini ci-dessus dans l'exemple 1. On constate que le pourcentage en masse de particules dont la taille déterminée par Sédigraph est inférieure à 0,3 µm est de 82 %. Cet hydrate d'aluminium est hautement dispersible.

## Revendications

1. Procédé de préparation d'un hydrate d'aluminium présentant une dispersibilité d'au moins 80% en poids pour un diamètre inférieur ou égal à 0,3 µm, **caractérisé en ce qu'**on met en oeuvre les étapes suivantes :
1 - mélange d'une source acide d'aluminium et d'une base ou d'une source basique d'aluminium et d'un acide de manière à précipiter un monohydrate d'alumine,
2 - mûrissement,
3 - filtration,
4 - lavage, et
5 - séchage,
le mélange de l'étape 1 étant réalisé sans rétromélange.

2. Procédé selon la revendication 1 **caractérisé en ce que** le mélange de l'étape 1 est réalisé dans un réacteur à écoulement piston.

3. Procédé selon la revendication 1 ou 2, **caractérisé en ce que** le mélange de l'étape 1 est réalisé dans un mélangeur statique.

4. Procédé selon l'une des revendications 1 à 3 **caractérisé en ce que** l'étape 1 est réalisé à un pH compris entre 6 et 10 pour une température de 60°C.

5. Procédé de préparation d'un hydrate d'aluminium présentant une dispersibilité d'au moins 80% en poids pour un diamètre inférieur ou égal à 0,3 µm, **caractérisé en ce que** l'on met en oeuvre les étapes suivantes :
1' - mélange dans un réacteur agité avec rétromélange de sulfate d'aluminium et d'une base, ces réactifs étant utilisés sous forme de solutions aqueuses, à pH compris entre 6 et 8,5 et à une température comprise entre 50 et 95°C, pour former de l'hydrate d'aluminium en dispersion,
2' - mûrissement à pH compris entre 9 et 11 et à une température comprise entre 60 et 90°C, la dispersion étant agitée au cours du mûrissement,
3' - filtration,
4' - lavage, et
5' - séchage,

6. Procédé selon la revendication 5, **caractérisé en ce que** la source basique d'aluminium est choisie parmi les sels basiques d'aluminium tels que l'aluminate de sodium, l'aluminate de potassium.

7. Procédé selon la revendication 5 ou 6 **caractérisé en ce qu'**au cours de l'étape 1', le pH est compris entre 6,5 et 8,5.

8. Procédé selon l'une des revendications 5 à 7 **caractérisé en ce qu'**au cours de l'étape 1', le pH est compris entre 6,5 et 7.

9. Procédé selon l'une des revendications 5 à 8 **caractérisé en ce qu'**au cours de l'étape 1', la température est comprise entre 50 et 70°C.

10. Procédé selon l'une des revendications 1 à 9 **caractérisé en ce que** l'hydrate d'aluminium présente une taille des cristallites inférieure à 50 Å.

11. Procédé selon l'une des revendications 1 à 10 **caractérisé en ce que** l'hydrate d'aluminium présente une dispersibilité d'au moins 90% en poids pour un diamètre inférieur ou égal à 0,3 µm.

12. Procédé selon l'une des revendications 1 à 11 **caractérisé en ce que** l'hydrate d'aluminium est majoritairement à base de monohydrate d'aluminium.

13. Procédé selon l'une des revendications 1 à 12 **caractérisé en ce que** l'hydrate d'aluminium présente un diamètre des pores compris entre 50 et 300 Å.

14. Procédé selon l'une des revendications 1 à 13 **caractérisé en ce que** l'hydrate d'aluminium présente une surface spécifique supérieure à 280 m²/g.

## Claims

1. A process for preparing an aluminium hydrate having a dispersibility of at least 80% by weight for a diameter of 0.3 µm or less, comprising conducting the following steps:
1. mixing a source of an aluminium acid and a base or a basic source of aluminium and an acid, to precipitate an alumina monohydrate;
2. maturing;
3. filtering;
4. washing; and
5. drying;
wherein the mixing of step 1 is carried out without back-mixing.

2. A process according to claim 1 **characterized in that** the mixing of step 1 is carried out in a plug flow reactor.

3. A process according to claim 1 or claim 2, **characterized in that** the mixing of step 1 is carried out in a static mixer.

4. A process according to claims 1 to 3 **characterized in that** step 1 is carried out at a pH comprised between 6 and 10 for a temperature equal to 60°C.

5. A process for preparing an aluminium hydrate having a dispersibility of at least 80% by weight for a diameter of 0.3 µm or less, comprising conducting the following steps:
1'.mixing aluminium sulphate and a base, these reactants being used in the form of aqueous solutions, at a pH in the range 6 to 8.5 in a stirred reactor with back-mixing, at a temperature in the range 50°C to 95°C, to form a dispersion of the aluminum hydrate;
2'.maturing at a pH in the range 9 to 11 and at a temperature in the range 60°C to 90°C, the dispersion being stirred while maturing;
3'.filtering;
4'. washing; and
5'.drying.

6. A process according to claim 5 **characterized in that** the basic aluminium source is selected from basic aluminium salts such as sodium aluminate or potassium aluminate.

7. A process according to claim 5 or claim 6, **characterized in that** during step 1', the pH is in the range 6.5 to 8.5.

8. A process according to any one of claims 5 to 7, **characterized in that** during step 1', the pH is in the range 6.5 to 7.

9. A process according to any one of claims 5 to 8, **characterized in that** during step 1', the temperature is in the range 50°C to 70°C.

10. A process according to any one of claims 1 to 9 **characterized in that** the aluminium hydrate has a crystallite size of less than 50 Å.

11. A process according to any one of claims 1 to 10, **characterized in that** the aluminium hydrate has a dispersibility of at least 90% by weight for a diameter of 0.3 µm or less.

12. A process according to any one of claims 1 to 11 **characterized in that** the aluminium hydrate is mainly based on aluminium monohydrate.

13. A process according to any one of claims 1 to 12 **characterized in that** the aluminium hydrate has a pore diameter in the range 50 Å - 300 Å.

14. A process according to any one of claims 1 to 13 **characterized in that** the aluminium hydrate has a specific surface area of more than 280 m²/g.

## Patentansprüche

1. Verfahren zur Herstellung eines Aluminiumhydrats, das über eine Dispergierbarkeit von wenigstens 80 Gew.-% für einen Durchmesser kleiner oder gleich 0,3 µm verfügt, **dadurch gekennzeichnet, dass** man die folgenden Stufen durchführt:
1 - Mischen einer sauren Quelle für Aluminium und einer Base oder einer basischen Quelle für Aluminium und einer Säure, derart, dass ein Aluminiumoxidmonohydrat abgeschieden wird,
2 - Reifen
3 - Filtrieren
4 - Waschen und
5 - Trocknen,
wobei das Gemisch der Stufe 1 ohne Rückmischen durchgeführt wird.

2. Verfahren nach Anspruch 1, **dadurch gekennzeichnet, dass** das Mischen der Stufe 1 in einem Reaktor mit Kolbenströmung realisiert wird.

3. Verfahren nach Anspruch 1 oder 2, **dadurch gekennzeichnet, dass** das Mischen der Stufe 1 in einem statischen Mischer realisiert wird.

4. Verfahren nach einem der Ansprüche 1 bis 3, **dadurch gekennzeichnet, dass** die Stufe 1 bei einem pH-Wert zwischen 6 und 10 bei einer Temperatur von 60°C durchgeführt wird.

5. Verfahren zur Herstellung eines Aluminiumhydrats, das über eine Dispergierbarkeit von wenigstens 80 Gew.-% über einen Durchmesser kleiner oder gleich 0,3 µm verfügt, **dadurch gekennzeichnet, dass** man die folgenden Stufen durchführt:
1'- Mischen in einem bewegten Reaktor unter Rückmischen von Aluminiumsulfat und einer Base, wobei diese Reaktionsteilnehmer in Form wässrigen Lösungen verwendet werden, mit einem pH-Wert zwischen 6 und 8,5 und einer Temperatur zwischen 50 und 95°C, um eine Dispersion von Aluminiumhydrat zu bilden
2'- Reifen bei einem pH-Wert zwischen 9 und 11 und einer Temperatur zwischen 60 und 90°C, wobei die Dispersion während des Reifens gerührt wird
3'- Filtrieren,
4'- Waschen und
5'- Trocknen.

6. Verfahren nach Anspruch 5, **dadurch gekennzeichnet, dass** die basische Aluminiumquelle gewählt ist aus den basischen Salzen des Aluminiums wie Natriumaluminat oder Kaliumaluminat.

7. Verfahren nach Anspruch 5 oder 6, **dadurch gekennzeichnet, dass** während der Stufe 1' der pH-Wert zwischen 6.5 und 8,5 beträgt.

8. Verfahren nach einem der Ansprüche 5 bis 7, **dadurch gekennzeichnet, dass** während der Stufe 1' der pH-Wert zwischen 6,5 und 7 liegt.

9. Verfahren nach einem der Ansprüche 5 bis 8, **dadurch gekennzeichnet, dass** während der Stufe 1' die Temperatur zwischen 50 und 70°C liegt.

10. Verfahren nach einem der Ansprüche 1 bis 9, **dadurch gekennzeichnet, dass** das Aluminiumhydrat eine Abmessung der Kristallite von weniger als 50 Å aufweist.

11. Verfahren nach einem der Ansprüche 1 bis 10, **dadurch gekennzeichnet, dass** das Aluminiumhydrat eine Dispergierbarkeit von wenigstens 90 Gew-% für einen Durchmesser kleiner oder gleich 0,3 µm aufweist.

12. Verfahren nach einem der Anspr0che 1 bis 11, **dadurch gekennzeichnet, dass** das Aluminiumhydrat überwiegend auf der Basis von Aluminiummonohydrat vorliegt.

13. Verfahren nach einem der Ansprüche 1 bis 12, **dadurch gekennzeichnet, dass** das Aluminiumhydrat einen Porendurchmesser zwischen 50 und 300 Å besitzt.

14. Verfahren nach einem der Ansprüche 1 bis 13, **dadurch gekennzeichnet, dass** das Aluminiumhydrat eine spezifische Oberfläche über 280 m²/g besitzt.
